# EUROPEAN PATENT APPLICATION

(11) **EP 2 628 899 A2**
(43) Date of publication of application: **21.08.2013**
(21) Application number: 13154587.3
(22) Date of filing: 08.02.2013
(51) Int. Cl.: F01D 5/14

(54) **Turbomachine flow improvement system**

(30) Priority: 09.02.2012 US 201213369882
(71) Applicant: General Electric Company, Schenectady, New York 12345 (US)
(72) Inventor: Garg, Umesh, 560066 Bangalore, Karnataka (IN); Rangwalla, Akil Abbas, Greenville, SC South Carolina 29615 (US); Soranna, Francesco, Greenville, SC South Carolina 29615 (US); Valliappan, Lakshmanan, 560066 Bangalore, Karnataka (IN)
(74) Representative: Cleary, Fidelma

(57) **Abstract**

A turbomachine (2) includes a housing (13) that defines a flow path (16), and a stage (21,22) arranged within the housing (13). The stage (21,22) includes a plurality of rotating airfoil members and a first (36, 43) plurality of stationary airfoil members (46). A second plurality of stationary airfoil members (50) is arranged directly adjacent to the first plurality of stationary airfoil members (46). A flow improvement system (100) is associated with each of the first and second pluralities of stationary airfoil members (46,50). The flow improvement system (100) establishes a predetermined clocking of each of the first plurality of stationary airfoil members (46) relative to each of the second plurality of stationary airfoil members (50) to improve flow characteristics along the flow path (16).

## Description

### BACKGROUND OF THE INVENTION

The subject matter disclosed herein relates to the art of turbomachines and, more particularly, to a turbomachine including a flow improvement system.

Many turbomachines include a compressor portion linked to a turbine portion through a common compressor/turbine shaft or rotor and a combustor assembly. The compressor portion guides a compressed air flow through a number of sequential stages toward the combustor assembly. In the combustor assembly, the compressed air flow mixes with a fuel to form a combustible mixture. The combustible mixture is combusted in the combustor assembly to form hot gases. The hot gases are guided to the turbine portion through a transition piece. The hot gases expand through the turbine creating work that is output, for example, to power a generator, a pump, or to provide power to an aircraft. In addition to providing compressed air for combustion, a portion of the compressed airflow is passed through the turbine portion for cooling purposes.

In many cases, the compressor portion and/or the turbine portion will include an equal number of blades located in successive stationary or rotating rows. In such cases, a circumferential angular spacing between blades is the same in each of the successive rows. Generally, the circumferential spacing results in alignment of blades in the stationary rows and an alignment of blades in the rotating rows. This alignment creates various aerodynamic performance issues and/or thermal environment issues of a flow passing along a flow path of the compressor portion and/or the turbine portion. Manufacturers have clocked or circumferentially off-set adjacent rows of blades in the rotating rows or adjacent rows of blades in the stationary rows to control flow and influence aerodynamic performance and/or thermal environment.

In the compressor portion, air is drawn in through an intake and passed through the number of sequential stages. Each of the sequential stages includes a plurality of stators or nozzles that guides the air toward a plurality of rotating buckets or blades. The rotating blades force the airflow along the compressor to achieve a desired pressure increase. Interaction patterns and acoustic spinning wave modes, resulting from the air passing across stationary and rotating components, develops at each stage. At or above cut-on, the spinning wave modes typically propagate downstream through the compressor and may enter the combustor assembly. The development and propagation of the spinning wave modes can create undesirable unsteady pressure patterns as well as lead to the development of unwanted noise from the compressor portion.

### BRIEF DESCRIPTION OF THE INVENTION

According to one aspect of the invention a turbomachine includes a housing that defines a flow path, and a stage arranged within the housing. The stage includes a plurality of rotating airfoil members and a first plurality of stationary airfoil members. A second plurality of stationary airfoil members is arranged directly adjacent to the first plurality of stationary airfoil members. A flow improvement system is associated with each of the first and second pluralities of stationary airfoil members. The flow improvement system establishes a predetermined clocking of each of the first plurality of stationary airfoil members relative to each of the second plurality of stationary airfoil members to improve flow characteristics along the flow path.

According to another aspect of the invention a turbomachine system includes a compressor portion, a turbine portion mechanically linked to the compressor portion, and a combustor assembly fluidly connected to each of the compressor portion and the turbine portion. The compressor portion comprises the turbomachine as described above.

According to yet another aspect of the invention a method of improving flow characteristics in a turbomachine includes forming a first spinning wave having a first plurality of peaks and a first plurality of troughs that flows along a flow path of the turbomachine, forming a second spinning wave having a second plurality of peaks and a second plurality of troughs that flows along the flow path of the turbomachine, directing the first spinning wave into the second spinning wave causing the first plurality of peaks to align with the second plurality of troughs to form a discharge flow having a lower spatial distribution of unsteady pressure.

These and other advantages and features will become more apparent from the following description taken in conjunction with the drawings.

### BRIEF DESCRIPTION OF DRAWINGS

Embodiments of the present invention will now be described, by way of example only, with reference to the accompanying drawings in which:
FIG. 1 is a schematic view of a turbomachine including a flow improvement system in accordance with an exemplary embodiment; and
FIG. 2 is a schematic view of a compressor portion of the turbomachine of FIG. 1 illustrating the flow improvement system in accordance with an exemplary embodiment.

The detailed description explains embodiments of the invention, together with advantages and features, by way of example with reference to the drawings.

### DETAILED DESCRIPTION OF THE INVENTION

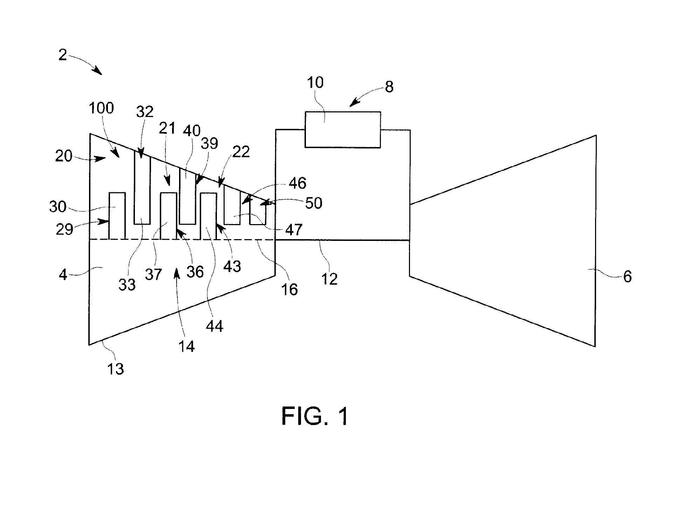

With reference to FIG. 1, a turbomachine constructed in accordance with an exemplary embodiment is illustrated generally at 2. Turbomachine 2 includes a compressor portion 4 fluidly connected to a turbine portion 6. A combustor assembly 8 also fluidly connects compressor portion 4 and turbine portion 6. Combustor assembly 8 includes a plurality of combustors, one of which is shown at 10, arranged in a can-annular array about turbomachine 2. The number and arrangement of combustors can vary.

As shown, compressor portion 4 is mechanically linked to turbine portion 6 through a common compressor/turbine shaft 12. Compressor portion 4 includes a housing 13 that encases a plurality of compressor stages 14 that extend along a fluid path 16. In the exemplary embodiment shown, compressor portion 4 includes a first compressor stage 20, a second compressor stage 21, and a third compressor stage 22. Turbine portion 6 also includes a number of stages (not shown). Of course it should be understood that the number of stages in compressor portion 4 and turbine portion 6 could vary. With this arrangement, air passing into a compressor intake (not separately labeled) flows along fluid path 16 and is compressed through compressor stages 20-22 to form compressed air. A first portion of the compressed air flows into combustor assembly 8, mixes with a combustible fluid, and combusted to form combustion gases. The combustion gases expand through turbine portion 6 creating work that is output from turbomachine 2. A second portion of the compressed air passes through turbine portion 6 as a cooling fluid.

First compressor stage 20 includes a plurality of rotating airfoil members 29. Rotating airfoil members 29 take the form of blades or buckets 30 that are coupled to common compressor/turbine shaft 12 through a first stage rotor (not shown). First compressor stage 20 also includes a plurality of stationary airfoil members 32. Stationary airfoil members 32 take the form of vanes or nozzles 33 fixedly mounted relative to compressor housing 13. Nozzles 33 guide the airflow toward second compressor stage 21. Accordingly, second compressor stage 21 includes a plurality of rotating airfoil members 36. Rotating airfoil members 36 take the form of blades or buckets 37 that are coupled to common compressor/turbine shaft 12 through a second stage rotor (not shown). Second compressor stage 21 also includes a plurality of stationary airfoil members 39. Stationary airfoil members 39 take the form of vanes or nozzles 40 fixedly mounted relative to compressor housing 13. Nozzles 40 direct the airflow toward third compressor stage 22. Third compressor stage 22 includes a plurality of rotating airfoil members 43. Rotating airfoil members 43 take the form of blades or buckets 44 that are coupled to common compressor/turbine shaft 12 through a third stage rotor (not shown). Third compressor stage 22 also includes a plurality of stationary airfoil members 46. Stationary airfoil members 46 take the form of vanes or nozzles 47 fixedly mounted relative to compressor housing 13. Nozzles 47 guide the airflow toward a plurality of exit guide vanes (EGV) 50 that direct the compressed air into combustor assembly 8 and toward a first stage (not separately labeled) of turbine portion 6. EGV's 50 are arranged directly adjacent to nozzles 47. More specifically, compressor portion 4 is devoid or lacks any rotating airfoil members between nozzles 47 and EGV's 50.

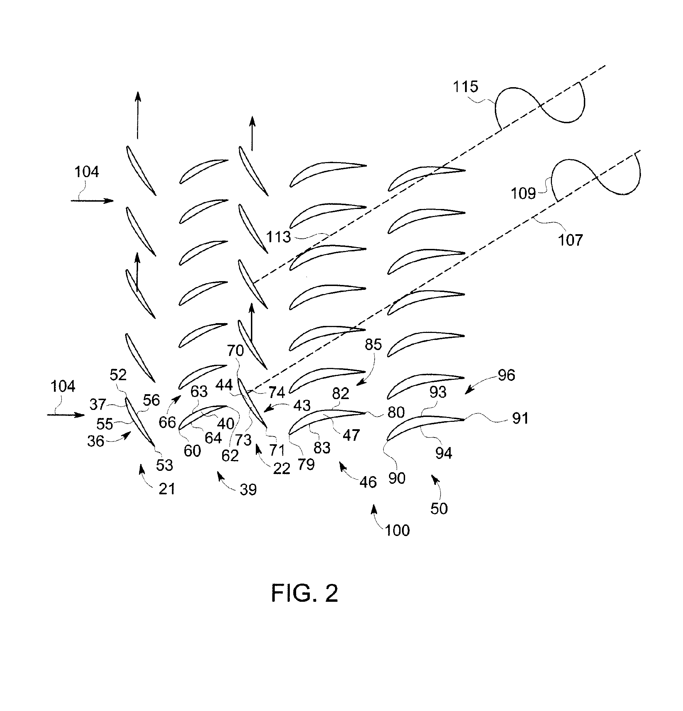

Reference will now be made to FIG. 2, in describing second and third compressor stages 21 and 22 as well as EGV's 50. As shown, each of the second plurality of rotating airfoil members 36 includes a leading edge 52 and a trailing edge 53 that are joined by a suction side 55 and a pressure side 56. Similarly, each of the second plurality of stationary airfoil members 39 includes a leading edge 60 and a trailing edge 62 that are joined by a suction side 63 and a pressure side 64. Second plurality of stationary airfoil members 39 are spaced one from another to form a plurality of second stage nozzle passages, one of which is indicated at 66. Likewise, third plurality of rotating airfoil members 43 include a leading edge 70 and a trailing edge 71 that are joined by a suction side 73 and a pressure side 74. Third plurality of stationary airfoil members 46 include a leading edge 79 and a trailing edge 80 that are joined by a suction side 82 and a pressure side 83. Third plurality of stationary airfoil members 46 are spaced one from another to establish a plurality of third stage nozzle passages, one of which is indicated at 85.

In accordance with one aspect of the exemplary embodiment, turbomachine 2 includes a flow improvement system that takes the form of a spinning wave reduction system 100 which, as will be detailed more fully below, reduces spinning wave mode propagation along flow path 16. In operation, an airflow, such as indicated at 104, passes from first stage 20 toward second stage 21. Airflow 104 passes across second plurality of rotating members 36 and flows over nozzles 40 and through nozzle passages 66 creating a wake zone (not shown) that flows toward third stage 22. A first spinning wave 107 having a first pressure pattern or spinning wave mode 109 develops along flow path 16 as a result of interactions in airflow 104 between buckets 44 and nozzles 47. The term "spinning wave" should be understood to describe a pressure wave having a non-homogenous pressure pattern that develops as a result of interactions between stationary and rotating members. First spinning wave 107 begins to propagate downstream in compressor portion 4. Another spinning wave 113 having a spinning wave mode 115 develops as a result of interactions in the airflow passing from buckets 44 and EGV 50. More specifically, the airflow passing buckets 44 interacts with EGV 50 creating a wake zone (not shown) that passes through nozzle passages 96 toward a first stage (not shown) of turbine 6. Buckets 44 generate first and second spinning waves as a result of interactions with downstream nozzles 47 and EGV 50. Spinning wave reduction system 100 causes first spinning wave 107 to cancel out second spinning wave 113 as will be detailed more fully below.

Spinning wave reduction system 100 establishes a desired clocking or circumferential offset of nozzles 47 and EGV's 50 resulting in a misalignment between nozzle passages 85 and nozzle passages 96. As shown, spinning wave reduction system 100 establishes a desired relative positioning between nozzles 47 and EGV's 50 setting up an interaction between first spinning wave 107 and second spinning wave 113. More specifically, the particular clocking misalignment established by spinning wave reduction system 100 causes peaks (not separately labeled) of first spinning wave 107 to align with troughs (not separately labeled) of second spinning wave 113. The particular alignment of the peaks of first spinning wave 107 and the troughs of second spinning wave 113 homogenizes a spatial distribution of unsteady pressure downstream of EGV's 50 resulting in improved compressor dynamics. The particular clocking provided by spinning wave reduction system 100 may be achieved through a particular off set between an equal number of nozzles 47 and EGV's 50.

At this point it should be understood that the exemplary embodiments provide a system for improving flow within a turbomachine. The exemplary embodiment enhances fluid flow characteristics in a compressor portion of a turbomachine by setting up a particular interaction between spinning wave modes moving along the flow path. The particular interaction leads to peaks of a first spinning wave substantially aligning with troughs of a second spinning wave reducing spinning wave propagation into the compressor and the turbine portion of the turbomachine. The reduction of spinning wave mode propagation in the compressor portion leads to improved combustor operation, reduced system dynamics, and enhanced service life for the turbomachine.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A turbomachine (2) comprising:
a housing (13) that defines a flow path (16);
a stage (20-22) arranged within the housing (13), the stage (20-22) including a plurality of rotating airfoil members (29) and a first plurality of stationary airfoil members (46);
a second plurality of stationary airfoil members (50) arranged directly adjacent to the first plurality of stationary airfoil members (46); and
a flow improvement system (100) associated with each of the first and second pluralities of stationary airfoil members (32,39), the flow improvement system (100) establishing a predetermined clocking of each of the first plurality of stationary airfoil members (32) relative to each of the second plurality of stationary airfoil members (39) to improve flow characteristics along the flow path (16).

2. The turbomachine according to claim 1, wherein the second plurality of stationary airfoil members (50) constitute exit guide vanes (EGV) configured to guide a fluid flow toward a turbomachine combustor (8).

3. The turbomachine according to claim 1 or 2, wherein the predetermined clocking is configured to align peaks of a first spinning (107) wave moving along the flow path with troughs of a second spinning wave (113) moving along the flow path.

4. The turbomachine according to any of claims 1 to 3, wherein the stage (20-22) comprises a stage in a compressor portion (4) of the turbomachine (2).

5. A turbomachine system (2) comprising:
a compressor portion (4);
a turbine portion (6) mechanically linked to the compressor portion (4);
a combustor assembly (8) fluidly connected to each of the compressor portion (4) and the turbine portion (6), wherein the compressor portion (4) comprises the turbomachine of any or claims 1 to 4.

6. The turbomachine system according to claim 5, wherein the compressor portion is devoid of rotating airfoil members arranged between the first plurality of stationary airfoil members (22) and the second plurality of stationary airfoil members (50).

7. A method of improving flow characteristics in a turbomachine (2), the method comprising:
forming a first spinning wave (107) having a first plurality of peaks and a first plurality of troughs that flows along a flow path (16) of the turbomachine (2);
forming a second spinning wave (113) having a second plurality of peaks and a second plurality of troughs that flows along the flow path (16) of the turbomachine (2);
directing the first spinning wave (107) into the second spinning wave (113) causing the first plurality of peaks to align with the second plurality of troughs to form a discharge flow having a lower spatial distribution of unsteady pressure.

8. The method of claim 7, wherein directing the first spinning wave (107) into the second spinning wave (113) includes clocking a first plurality of airfoil members (46) relative to a second plurality of airfoil members (50) arranged downstream and directly adjacent the first plurality of airfoil members (46).

9. The method of claim 8, wherein clocking the first plurality of airfoil members (46) relative to the second plurality of airfoil members (50) includes off-setting a first plurality of stationary guide vanes (47) relative to a second plurality of stationary guide vanes (50).

10. The method of claim 9, wherein directing the second spinning wave (113) into the first spinning wave (107) includes passing the second spinning wave (113) across the second plurality of stationary guide vanes (50).

11. The method of claim 9 or 10, wherein off-setting the first plurality of stationary guide vanes (47) relative to the second plurality of stationary guide vanes (50) includes off-setting the first plurality of stationary guide vanes (47) relative to a plurality of compressor exit guide vanes (50).

12. The method of any of claims 7 to 11, further comprising: passing the discharge flow into a turbomachine combustor (10).
